# EUROPEAN PATENT SPECIFICATION

(11) **EP 2 834 534 B1**
(45) Date of publication and mention of the grant of the patent: **27.07.2016**
(21) Application number: 13724356.4
(22) Date of filing: 05.04.2013
(51) Int. Cl.: F16G 13/16, H02G 11/00

(54) **CABLE CHAIN SYSTEM**
KABELKETTENSYSTEM
SYSTÈME DE CHAÎNE PORTE-CÂBLES

(30) Priority: 05.04.2012 IT MI20120551
(43) Date of publication of application: 11.02.2015
(73) Proprietor: Findalto S.r.l., 20052 Monza (MB) (IT)
(72) Inventor: MAURI, Giovanni, I-20052 Monza (MB) (IT)
(74) Representative: Riccardi, Sergio
(86) International application number: PCT/IB2013/000614
(87) International publication number: WO 2013/150367

(56) References cited:
- EP-A1- 0 725 228
- EP-A1- 2 026 437
- DE-U1-202008 005 165
- KR-B1- 101 108 209
- US-A- 3 020 362
- US-A1- 2005 040 275

## Description

The present invention relates to a cable chain system comprising a cable chain and a chain guide channel. The system of the present invention is particularly useful for applications where the travel of the operative device, fed by cables arranged inside the chain, has a considerable extension.

It is well known that cable chains are used when it is necessary to feed energy to an operative device travelling along a predetermined stroke, for instance a working tool of a numerical control machine or a device to take parts from an automated store and the like. These operative devices frequently need to be fed from one or more sources, that may be hydraulic, electric, pneumatic or other nature. It is clear that the longer is the travel of the operative device, the longer are the feed cables, so that the weight of the cables and of the chain increases accordingly. These static loads are then added to the dynamic loads coming from the chain acceleration as it is driven by the operative device. Moreover, in case of longer strokes and to keep low the travelling time, accelerations and consequently the inertial loads are increasing in accordance with the stroke length. All these conditions cause a total load on the chain that may reach such an amount to jeopardize a smooth operation.

Many manufacturers of cable chain systems for example EP 2026437, in order to support the total weight of cables and chain, adopted chain configurations where a first length proximal to the feeding sources, is lying on a plane and therefore is standstill, while a second length proximal to the mobile operative device, is folded and slidable on the first length. If on one hand such a configuration allows to support the chain, on the other hand it causes two further technical problems: wear caused the chain mobile length sliding on the underlying first length and moreover a considerable drag due to the sliding friction between the two chain lengths. More particularly in the return stroke, namely the movement of the operative device causing the chain mobile length to lie on the support plane, the resistance of the chain against the movement of the operative device tends to separate the mobile length from the stationary length, according to an instability typical of the combined bending and compressive stress exerted by the operative device on the corresponding chain end. The consequence is that the regular chain operation is damaged by constant bounces of the mobile length on the stationary length, causing a greater noise, irregularity of the movement of the operative device and a greater risk of system failure.

Obviously in the course of time several attempts were made to find a solution of the above mentioned problems. For instance document KR 1001108209 discloses a cable chain system, where the chain is provided with a particular link, on which there is arranged a wheel surrounded by a support surface movable relative to the link. This support surface is moved upwards only when the chain is lying in the support channel. Therefore the chain operation will be less subject to friction in view of the wheels, but at the same time said wheels moving on the lower length of the chain cause bounces of the upper length of the chain when sliding on the lower length.

Another example of prior art is disclosed in document EP 0725228 comprising a carriage moving between the upper length and lower length of the chain, and provided with rollers. The system is also provided with a driving arm, pulling a rope connected to the moving carriage, so that the rope moves the carriage, which in turn drives the upper length of the chain to which it is connected. The chain is also connected to a driving arm. The rollers are moving on the guide tray, and the system comprises a rather high number of components for the movement of the various parts of the system. Said system allows indeed to reduce the sliding friction and is less prone to bounces, but it is very complex, is difficult to be assembled, is very heavy (with higher tractive effort), therefore more subject to default and difficult to be maintained and serviced and finally very expensive.

In order to solve the above mentioned technical problems, the system of the present invention provides for a chain guide channel having supports preferably constituted by rollers, fixed to the channel side walls and adapted to support the chain movable length, and a cable chain comprising runners having protrusions and recesses suitably configured to match with said support rollers, said runners being fixed to the chain links.

As it will become apparent from the following detailed description of the system of the present invention, the provision of support rollers allows to convert the sliding friction, due to the sliding movement of a chain length on the other length, into a rolling friction between the runners of each link and the rollers on the side walls of the guide channel.

Moreover, another advantage of the present invention, is the presence of fixed rollers also on the channel portion where the chain is lying, namely its lower length, making the sliding motion very smooth.

Still a further advantage of the cable chain system of the present invention, is the presence of inventive runners, having a special configuration with projections, said runners allowing to keep a constant distance between the upper and the lower length of the chain, thus preventing the noisy and often detrimental bounces of these lengths on one another.

In a further advantageous way, said chain sliding system, having a strongly reduced friction and a bounceless sliding motion, is manufactured with few additional elements, with clear advantage for a simple assembly of the cable chain system, simple and quick replacement of possible broken elements during maintenance and at last a reduction of the costs of manufacturing the cable chain system of the present invention.

These and other advantages of the cable chain system of the present invention will be achieved by a cable chain system comprising a cable chain, wherein there are at least two types of links, arranged parallel and on opposite sides of the chain, said links being connected by cross studs, the adjacent links of the same chain side being pivotally connected by rotoidal joints, each link of the first type being also provided with at least a runner of known type and a guide channel to house between its side walls, a chain length lying on a support plane of said channel; moreover in a particular advantageous way said side walls of the channel support plane, on which the chain is lying, are also provided with rollers on which said chain support surfaces are sliding; and each link of the second type being provided with an innovative runner made according to the features of the present invention, on which these are protrusions that in the lying condition of the chain, are arranged in a position coincident with said rollers, said innovative runners having also a support surface protruding outwards from the chain in both horizontal and vertical direction, said protruding surface creating a gap between upper and lower length of the chain, so as to support the upper length of the chain when said recess is positioned coincident with said roller.

Moreover said rollers are arranged along the whole stroke of the chain. Therefore on said fixed rollers provided on the channel side of the lying chain, the upper length of chain will slide without friction, and said runners provided with projections and recesses, in a particular advantageous way, allow to keep constant the distance between upper and lower length of the chain, along the whole stroke or travel of the chain, which is supported when during the movement said rollers are in correspondence of said recesses, so that the chain upper length does not undergo undesired bounces.

These and other characteristics and advantages will be easily understood by reading the following detailed description of preferred embodiments of the present invention, to be considered in connection with the accompanying sheets of drawings in which:
Fig. 1 is a perspective view of the guide channel and of the cable chain according to a first preferred embodiment of the present invention;
Fig. 2 is an isometric view of a chain step where two runners made according to the present invention are illustrated;
Fig. 3 is a detail of Fig. 1, showing two superposed chain lengths, provided with the runners according to the present invention;
Fig. 4 is a side view of cable chain system, showing the detail of a roller passing under a runner according to the present invention;
Fig. 5 is a lateral view of the cable chain system in a subsequent stage of movement, where the detail of a roller is shown, when passing two runners of the present invention, at the moment in which said runners are superposed;
Fig. 6 is still a lateral inner view, in which two runners of the present invention are illustrated, superposed in contact;
Fig. 7 is an enlarged side view of the outer side of a link provided with a runner according to the present invention; and
Fig. 8 is still another enlarged side view of the inner side of a link provided with a runner according to the present invention.

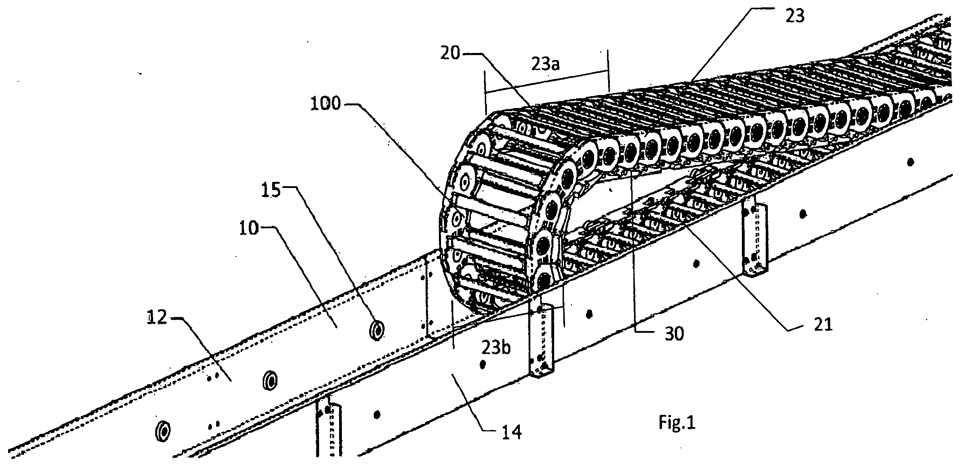

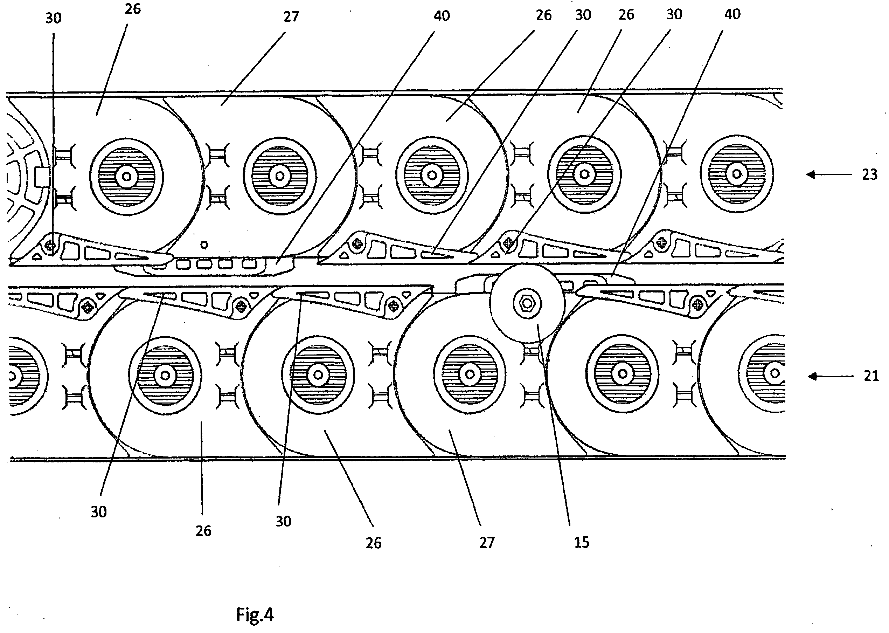

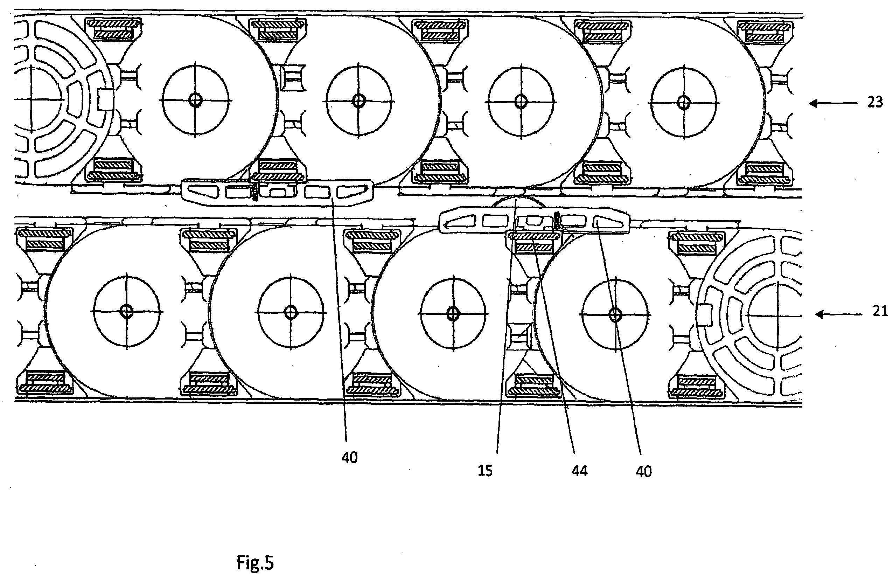

With reference now to Fig. 1, a cable chain system 100 is shown comprising a guide channel 10 and a cable chain 20. The guide channel 10 is defined by two side walls 12 and 14 arranged parallel to one another and at a distance adapted to lodge chain 20. Said chain 20 is constituted by a plurality of links 26 and 27, which are in turn so hinged to one another, that a relative rotation therebetween is possible. As it is known, said links 26 or 27 have such a reciprocal coupling as to set a predetermined angle of relative rotation: in short, each link 26 and 27 can rotate, in respect of the adjacent link 26 or 27, from a first position in which they are aligned, to a second position in which the angle of relative rotation reaches its maximum value. More particularly this angular value allows to define the radius of curvature R which is set to the chain when it is folded upon itself, as also shown by the configuration of chain of Fig. 1. The presence of said curvature allows to clearly define a first length 21 of chain lying inside the guide channel 10 and therefore stationary, and a second length 22 of chain, which is movable along the first portion 23a upstream the curvature and the first portion 23b downstream the curvature of the chain. Each link 26 and 27 is also provided, on the inner side facing the chain curvature, with a runner 30 or 40 which is fixedly mounted on the corresponding link 26 or 27. It is to be noted that the links 26 and 27 are structurally identical but are differentiated by being provided with different runners 30 or 40, having different functions as it will be better described and illustrated hereinafter. Finally, Fig. 1 shows a plurality of rollers 15 mounted on each side wall 12, 14 of the guide channel 10, at a predetermined distance to one another. In order to minimize the dimensions of the cable chain system 100, the centres of rollers 15 are positioned at a height slightly less than the height of the plane of runners 30 of the chain fixed length 21. The radius of rollers 15 is also chosen so that they protrude from the plane of runners 30; the mobile length 23 then can slide on the fixed length 21 avoiding a direct contact therewith, while it leans through the runners 30, on rollers 15 as shown in Figs. 4, 5 and 6. When there are no special limitations on the dimensions of the cable chain system 100 and/or no special restraints of other kind, the position of rollers 15 may be widely modified, for instance setting the centre of the rollers 15 well above the height of the plane of rollers 30.

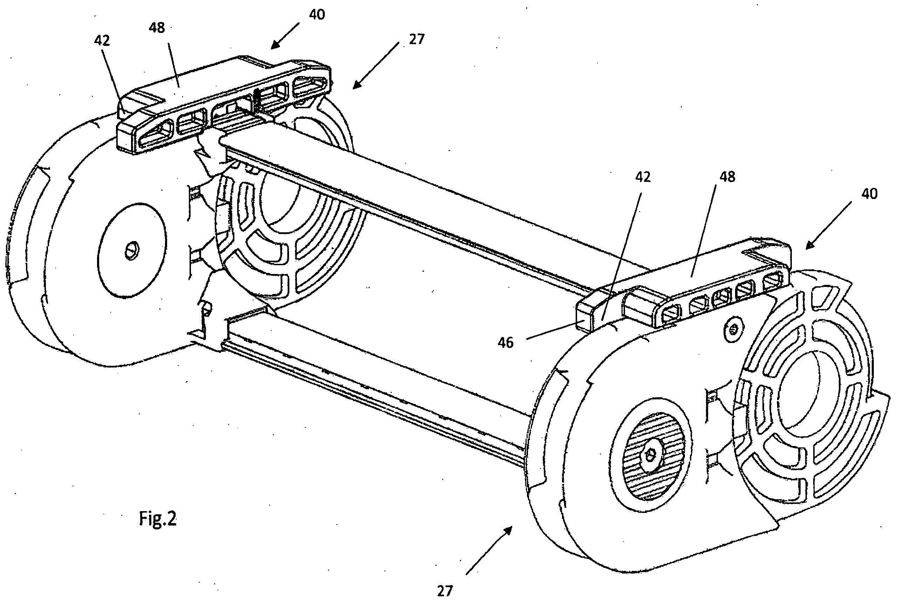

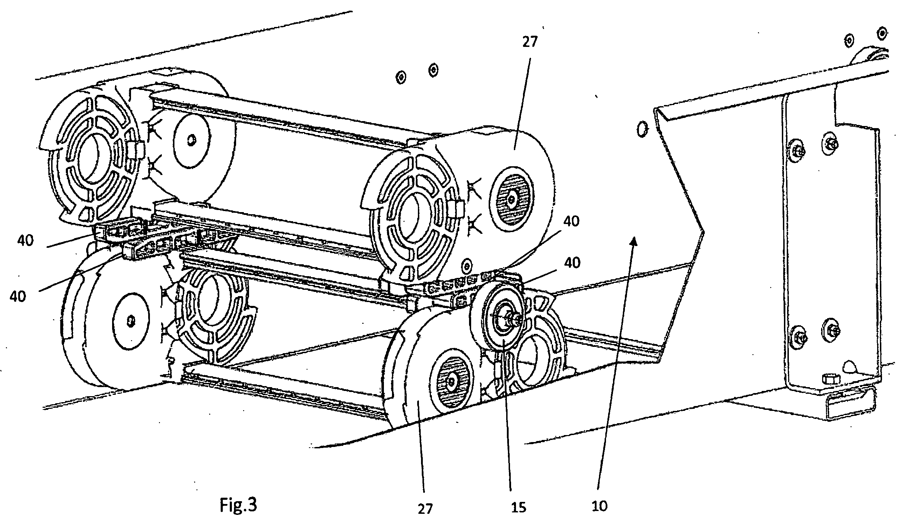

It is to be noted that, in absence of specific measures, that will be described hereinafter, the just described configuration of the cable chain system 100, although being now slidable and no longer subject to sliding friction, would have obvious problems of interference between the rollers 15 fixed on the side walls 12, 14 of the guide channel 10 and the rollers 30 of links 26 of chain 20. When a portion of chain 20 is in the lying position on the support plane of the guide channel 10, some links 26, namely those in a position coincident with the rollers 15, would be in an interference condition of their runners 30 with said rollers, thus causing a bounce when passing the rollers 15. In order to avoid said interference, in the cable chain system 100 there are inserted links 27 provided with runners 40 as shown in detail in Fig. 2, where a chain step is provided with two links 27 provided with the innovative runners 40, and in Fig. 3 where the detail is shown of two superposed links 27 with runners 40. On said runners 40 a recess 44 is provided, with such a dimension that the passage of the links from a rotated (or raised) position to a lying position in the support channel avoids said interference, thus allowing the rollers 15 to be perfectly lodged in said recess 44 and preventing any bounce.

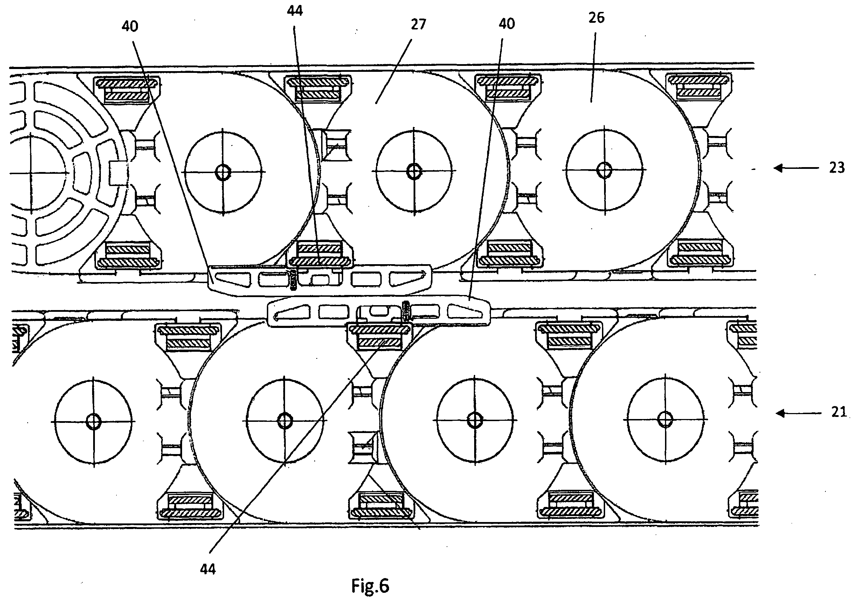

The runners 40 are positioned on the chain 20 in such a way to be positioned at the same distance between the rollers 15 fixed on the side walls of channel 10, so that during the movement of the chain, the position of the runners 40 always corresponds to the position of the rollers 15. In order to check easily the position correspondence, the runners 40 are arranged during the assembling and dimensioning steps of chain 20 in correspondence of specific links 27 which are then positioned in a coherent and coincident way with the rollers 15 in the guide channel 10. In short the distance between two consecutive rollers 15 will be a multiple of the step of the cable chain 20, said multiple corresponding to that used to place the links 27 along chain 20. This explains the choice to adopt a surface 46 of runner 40 which is greater than the surface just required for the rolling motion of roller 15; indeed such a surface allows, in spite of the presence of recess 44, to keep anyway a raised support surface 48, required when two runners 40 entering the channel are superposed during the sliding motion of chain, as clearly shown in the detail of Fig. 3 and in the sliding stage of chain 20 in Fig. 6. Indeed in this case, if the extended surface 46 and the raised surface 48 were not present, there would be a temporary lack of support of the mobile length 23 on the stationary length 21, at the point when the roller 15 is in correspondence of the recess 44, with consequent lowering and bouncing of chain. On the contrary the presence of a surface which is extended 46 and raised 48, allows to keep a constant support of the mobile length 23, because the raised portion 48 height balances the lowering of roller 15 into the recess 44. It is also clear that in this stage of motion with the two surfaces 46 in reciprocal contact, more particularly in view of the provision of the protruding or raised portion 48 on each surface 46, the two superposed runners 40 are sliding one onto the other. This occurs for the whole upper length of the chain sliding on the lower length as shown in Figs. 4, 5 and 6 where the chain is illustrated in different feed stages. It is clear that the runners 40 allow to keep a constant distance D between the upper and lower length of chain 20, preventing sudden bounces due to passage of rollers 15 in recesses 44, in view of the raised surface 48 maintaining the distance D between the upper and lower length of chain. Said distance D is advantageously kept constant in view of the continuous sliding contact of the raised surfaces 48 of rollers 40 on the upper and lower inner lengths of the chain.

It is to be pointed out that the dimension of the protrusions 48 is about equal to half the distance existing between the lying length and the mobile length of the chain, in order to advantageously keep a constant distance D between the two chain lengths, when lying either on the roller 15 or on two runners 40.

Moreover, to avoid interference between adjacent links on the same side of the chain, the runners 30 and 40 are provided on their front edge with cutouts 42, in which the adjacent links may reciprocally rotate.

In respect of the described preferred embodiment, one may consider a first alternative embodiment, where the runners 40 are not arranged at a fixed reciprocal distance, namely on links spaced according to a predetermined multiple of the chain step, but at variable distances along the longitudinal chain development, in other words on links spaced according to a variable multiple of the chain step. For instance, a first pair of runners 40 on parallel links of both sides of the chain will be placed at 5 chain steps to the subsequent pair, which is in its turn placed at 7 chain steps to the next pair, and so on, in accordance with a numerical series of prime integers such as 5, 7, 11, 13 and so forth; it is clear that, in order to avoid interferences, the arrangement of rollers 15 in guide channel 10 should maintain this numerical series or other similar configuration. The above described alternative embodiment has the particular advantage of avoiding, during the movement of the mobile length, a concomitant coincidence of more runners 40 of the mobile chain length with more rollers 15, that would obviously reduce the chain support, causing possible bounces and above all a high level of sliding friction.

Another alternative embodiment of the cable chain system of the present invention may provide for arranging the runners 40 on out of alignment links on both sides of the chain 29; in this case it is avoided that a pair of parallel links has both links provided with a runner 40 entering the channel. It is again to be emphasized that the arrangement of rollers 15 must be consistent with this choice so as to avoid interference between runners and rollers.

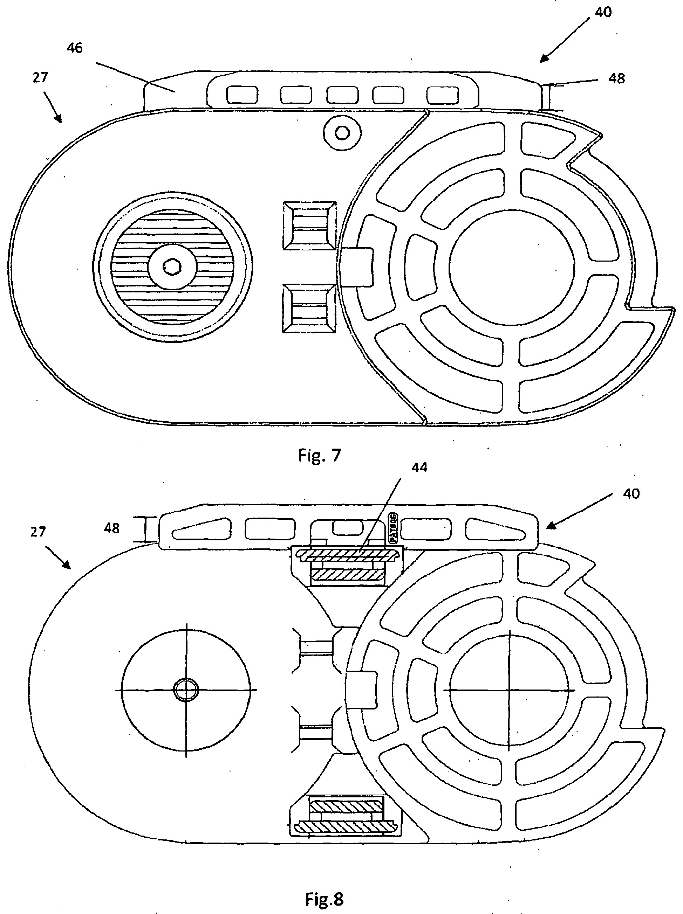

In any case the runners 40 are preferably made as shown in Figs. 7 and 8, wherein in the outer side view of Fig. 7 one can clearly see the surface 46 of runner 40 provided with the raised portion 48, and in the corresponding inner side view of Fig. 8 one can clearly se the recesses 44, also made on the surface 46, where the rollers 15 are lodged when the chain is sliding. It is clear that the rollers 15, together with the runners 40 made according to the present invention, allow to solve the problem of the sliding friction when the upper chain length is sliding folded on the lower chain length, as well as the problem of bounces or bumps, because the runners 40 allow to keep constant the distance D between the upper and lower length of the chain.

The man skilled in this art will be able to make modifications and variations to the cable chain system of the present invention, such as the geometrical shape of the runners and of their support surfaces, the proportions between the radius of the rollers and their mounting height in the channel, the materials to be used for the various system components, all these modifications and variations falling however within the scope of protection of the invention, as defined in the appended claims.

## Claims

1. A cable chain system (100) comprising a cable chain (20) having two types of parallel links (26,27) arranged on opposite sides (21,23) of the chain and connected by cross studs, adjacent links (26,27) of the same chain side being pivotally connected by rotoidal joints, each link of the first type (26) being also provided with at least a runner (30) said system comprising also a guide channel (10) for lodging, between its side walls (12,14), a chain length (21) lying on a support plane of said channel (10), said system (100) wherein said side walls (12,14) of the support plane of said channel (10), on which said chain (20) is lying, are also provided with rollers (15) on which said chain (20) is sliding, and **characterised in that** said links of the second type (27) being each provided with a runner (40) having recesses (44), which in the chain lying condition ' are in a position coincident with the position of said rollers (15), said runners (40) having a support surface protruding outward the chain both horizontally (46) and vertically (48), said support surface (46,48) defining a distance between lower (21) and upper (23) length of chain (20), supporting the upper portion of the chain (20) when said recess (44) is positioned in correspondence with said roller (15).

2. The cable chain system (100) of claim 1, wherein said rollers (15) are arranged on the whole stroke of the chain.

3. The cable chain system (100) of claim 1, wherein the distance between the upper (22) and lower (21) length of the chain is maintained constant on the whole stroke of the chain.

4. The cable chain system (100) of claim 1, wherein the distance between the upper (22) and lower (21) length of the chain, is defined by the distance D corresponding to the height of two superposed vertically protruding support surfaces (48).

5. The cable chain system (100) of claim 1, wherein the support surfaces of runners (40) provided with recesses (44), have surfaces (46) whose protrusion surface (48) is equal to half the distance between the upmost point of roller (15) and the portion without recesses of the surface (46) of a runner (40) in the lying chain length.

6. The cable chain system (100) of claim 1, wherein said rollers (15) are mounted on said side walls (12,14) in such a way that the sum of the roller radius and the height of its rotation axis, relative to said support surface, is greater than the height of the runner surface, relative to said support surface, in the lying chain length.

7. The cable chain system (100) of claim 1, wherein said rollers (15) are mounted on said side walls (12,14) in such a way that their axes of rotation are spaced for a multiple of the chain step.

8. The cable chain system (100) of claim 7, wherein said multiple of the chain step is progressively increased, between a pair of roller axes and the subsequent pair, according to a series of prime integers.

9. The cable chain system (100) of claim 1, wherein said runners (40) are provided with a cutout (42) preventing interference between the corresponding link (26) and the adjacent link when in a position of reciprocal rotation relative to one another.

10. The cable chain system (100) of claim 1, wherein the presence of a runner (40) provided with recess on a link (26) involves the presence of a runner (30) without recess on the corresponding parallel link (26) on the opposite side of the chain.

11. The cable chain system (100) of claim 1, wherein said runners (30,40) and said rollers (15) are made of plastics.

## Patentansprüche

1. Kabelkettensystem (100) für eine Kabelkette (20) mit zwei Typen von parallelen Gliedern (26, 27), die an gegenüberliegenden Kettenseiten (22,24) angeordnet und durch Querträger verbunden werden, worin die an der selben Kettenseite anliegenden Glieder durch Kupplungen drehverbunden werden und die Glieder (26) ersten Typs jeweils mit mindestens einem Gleitschuh (30) versehen sind, wobei das System außerdem einen Führungskanal (10) aufweist, um eine auf einer Abstellplatte des Kanals (10) liegende Kettenstrecke (21) zwischen seinen Seitenwänden (12, 14) aufzunehmen, und diese Seitenwände (12, 14) mit Rollen (15) für die Kettengleitung versehen sind, **dadurch gekennzeichnet, dass** die Glieder (27) zweiten Typs jeweils mit einem Gleitschuh (40) versehen sind, wobei diese Gleitschuhe Aussparungen (44) aufweisen, die sich bei der ausgestreckten Kette in einer mit der Lage der besagten Rollen (15) übereinstimmenden Stellung befinden, und dass diese Gleitschuhe (40) eine aus der Kette vorstehende waagerechte (46) bzw. senkrechte (48) Auflagefläche so aufweisen, dass diese Auflagefläche (46,48) einen Raum zwischen der unteren bzw. oberen Kettenstrecke bestimmt und die obere Strecke der Kabelkette (20) stützt, als die Aussparung (44) sich in einer der Rolle (15) entsprechenden Lage befindet.

2. Kabelkettensystem (100) nach Anspruch 1, worin die Rollen (15) am ganzen Kettenhub angeordnet sind.

3. Kabelkettensystem (100) nach Anspruch 1, worin der Abstand zwischen oberem (22) und unterem (21) Kettenteil am ganzen Kettenhub gleichbleibend ist.

4. Kabelkettensystem (100) nach Anspruch 1, worin der Abstand zwischen oberem (22) und unterem (21) Kettenteil dem von der Höhe von zwei vorstehenden Auflageflächen (48) bestimmten Abstand D entspricht.

5. Kabelkettensystem (100) nach Anspruch 1, worin die Auflageflächen der mit Aussparungen (44) versehenen Gleitschuhe (40) Bereiche (46) mit einem Vorsprung (48) aufweisen, welcher etwa der Hälfte des Abstands zwischen der höchsten Stelle der Rolle (15) und der Auflagefläche (46) eines Gleitschuhes (40) ohne Aussparung bei der ausgestreckten Kette entspricht.

6. Kabelkettensystem (100) nach Anspruch 1, worin die besagten Rollen (15) auf die Seitenwände (12, 14) so montiert werden, dass die Summe des Rollenhalbmessers und der Höhe ihrer Drehachse bezüglich der Auflagefläche, grösser als die Höhe der Rollenfläche bezüglich der Auflagefläche am Teil der ausgestreckten Kette (20).

7. Kabelkettensystem (100) nach Anspruch 1, worin die besagten Rollen (15) auf die Seitenwände (12, 14) so montiert werden, dass ihre Drehachsen ein Vielfaches der Kettenteilung entfernt sind.

8. Kabelkettensystem (100) nach Anspruch 1, worin das Vielfache der Kettenteilung zwischen zwei anschließenden Paaren Rollenachsen nach einer Reihe Primzahlen wächst.

9. Kabelkettensystem (100) nach Anspruch 1, worin die besagten Gleitschuhe (40) eine Kerbe (42) aufweisen, um ein Übermaß zwischen dem entsprechenden und dem anschließenden Glied (26) in ihrer gegenseitigen Drehstellung zu vermeiden.

10. Kabelkettensystem (100) nach Anspruch 1, worin die Anwesenheit eines mit Aussparung versehenen Gleitschuhes (40) auf einem Glied (26), die Anwesenheit eines Gleitschuhes (30) ohne Aussparung auf dem entsprechenden parallelen Glied (26) an der gegenüberliegenden Kettenseite vorsieht.

11. Kabelkettensystem (100) nach Anspruch 1, worin die besagten Gleitschuhe (30, 40) und Rollen (15) aus Kunststoff hergestellt werden.

## Revendications

1. Système (100) de chaîne porte-câbles, comprenant une chaîne (20) porte-câbles ayant deux types de mailles (26, 27) parallèles, disposées sur les côtés opposés (22,24) de la chaîne et jointes par des organes transversaux, et mailles (26, 27) adjacentes disposées sur le même côté de la chaîne et connectées par des joints rotatifs, chaque maille (26) du premier type étant aussi munie au moins d'un patin (30), le dit système comprenant aussi une gaine de guidage (10) pour loger entre ses parois latéraux (12, 14) un brin (21) de la chaîne étendu sur une surface d'appui de la dite gaine de guidage (10), dont les dites parois latéraux (12, 14) de la gaine de guidage (10) sont aussi munies des galets (15) pour le coulissement de la chaîne (20), le dit système étant **caractérisé en ce que** chaque maille (27) du deuxième type est munie d'un patin (40) ayant des évidures (44), lesquelles dans l'état de la chaîne étendue sont en position coïncidente avec les galets (15), les dits patins (40) ayant aussi une surface d'appui faisant saillie au dehors de la chaîne en sens horizontal (46) ainsi que vertical (48), les dites surfaces en saillie (46, 48) établissant un espace entre les brins supérieur et inférieur de la chaîne (20), en soutenant la partie supérieure de la chaîne (20) lorsque l'évidure (44) est en correspondance avec le dit galet (15).

2. Système (100) de chaîne porte-câbles selon la revendication 1, dont les dits galets (15) sont positionnés sur toute la course de la chaîne.

3. Système (100) de chaîne porte-câbles selon la revendication 1, dont la distance entre les parties supérieure (22) et inférieure (21) de la chaîne est constante le long de toute la course de la chaîne.

4. Système (100) de chaîne porte-câbles selon la revendication 1, dont la distance entre les parties supérieure (22) et inférieure (21) de la chaîne est établie par la distance D égale à la hauteur de deux surfaces d'appui en saillie verticale (48).

5. Système (100) de chaîne porte-câbles selon la revendication 1, dont les surfaces d'appui des patins (40) munis d'évidures (44) ont des surfaces (46) faisant saillie (48) par une quantité approximativement égale à la moitié de la distance entre le point plus en haut du galet (15) et la partie sans évidures de la surface d'appui (46) d'un patin (40) dans le brin de chaîne étendue.

6. Système (100) de chaîne porte-câbles selon la revendication 1, dont les dits galets (15) sont montés sur les parois latéraux (12, 14) en sorte que la somme du rayon du galet et de la hauteur de leur axe de pivotement à l'égard de la surface d'appui, est supérieure à la hauteur de la surface du patin à l'égard de la surface d'appui, dans le brin de chaîne étendue.

7. Système (100) de chaîne porte-câbles selon la revendication 1, dont les dits galets (15) sont montés sur les parois latéraux (12, 14) en sorte que la distance entre leur axes de rotation est un multiple du pas de la chaîne.

8. Système (100) de chaîne porte-câbles selon la revendication 1, dont le multiple du pas de la chaîne, entre une paire d'axes des galets et la paire successive, augmente selon une série des nombres premiers.

9. Système (100) de chaîne porte-câbles selon la revendication 1, dont les dits patins (40) ont une entaille (42) apte pour éviter une interférence entre la maille correspondante (26) et la maille adjacente en position de rotation relative entre eux.

10. Système (100) de chaîne porte-câbles selon la revendication 1, dont la présence d'un patin (40) avec évidure sur une maille (26) prévoit la présence d'un patin (30) sans évidure sur la maille correspondante (26) parallèle sur le côté opposé de la chaîne.

11. Système (100) de chaîne porte-câbles selon la revendication 1, dont les dits patins (30, 40) et les galets (15) sont réalisés en matière plastique.
